# EUROPÄISCHE PATENTANMELDUNG

(11) **EP 2 962 541 A1**
(43) Veröffentlichungstag der Anmeldung: **06.01.2016**
(21) Anmeldenummer: 15001784.6
(22) Anmeldetag: 16.06.2015
(51) Int. Cl.: A01D 61/00

(54) **SCHNEIDWERK MIT GESTEUERTEN EINZUGSFINGERN**

(30) Priorität: 30.06.2014 DE 102014009468
(71) Anmelder: Carl Geringhoff GmbH & Co. KG, 59227 Ahlen (DE)
(72) Erfinder: SURMANN, Klemens, 59227 Ahlen (DE); WEBERMANN, Dirk, 48308 Senden (DE)
(74) Vertreter: Weeg, Thomas

(57) **Zusammenfassung**

Die vorliegende Erfindung bezieht sich auf ein Schneidwerk (2) mit einem Rahmen, einem Messerbalken (4), Querfördervorrichtungen (6) und einer Einzugsschnecke (8) mit gesteuerten Einzugsfingern (10).

Um eine Lösung vorzuschlagen, bei der die Annahme und Abförderung von seitlich zugefördertem und sich in der Höhe aufbauendem Erntegut im Bereich der Förderschnecke verbessert wird, wird vorgeschlagen, dass im äußeren Bereich der Einzugsschnecke (8) angeordnete Einzugsfinger (10) bei einer Umdrehung der Einzugsschnecke (8) ihre maximal ausgefahrene Position in einer früheren Winkellage erreichen als im mittleren Bereich der Einzugsschnecke (8) angeordnete Einzugsfinger (11).

## Beschreibung

Die vorliegende Erfindung bezieht sich auf ein Schneidwerk mit einem Rahmen, einem Messerbalken, Querfördervorrichtungen und einer Einzugsschnecke mit gesteuerten Einzugsfingern.

Ein gattungsgemäßes Schneidwerk ist aus der Schrift DE 81 22 977.1 bekannt. Die Einzugsschnecke mit den gesteuerten Einzugsfingern ist in einem Bereich des Schneidwerks positioniert, in dem das von den Querfördervorrichtungen nach dem Schnitt im mittleren Bereich des Schneidwerks quer zur Vorfahrtrichtung der Erntemaschine zusammengeführte Erntegut in seiner Förderrichtung umgelenkt und entgegen der Vorfahrtrichtung nach hinten an den Einzugskanal einer Erntemaschine abgefördert wird. Da in diesem Bereich die bei der Vorfahrt der Erntemaschine über die gesamte Arbeitsbreite des Schneidwerks geschnittene Erntegutmenge zusammengeführt wird, ist hier ein erheblicher Materialvolumenstrom zu bewältigen. Obwohl es Schwankungen in der vom Schneidwerk geschnittenen Erntegutmenge geben kann, muss der Materialfluss an dieser Stelle möglichst gleichmäßig gehalten werden, damit die Arbeitsorgane der nachgeordneten Erntemaschine wie beispielsweise einem Mähdrescher eine homogene Gutmatte zugefördert bekommen. Schwankungen in der Gutmatte können bei einem Mähdrescher den Ausdrusch und die Körnerbruchrate und damit den Ernteertrag maßgeblich beeinträchtigen.

Durch die Rotationsbewegung der Einzugsschnecke ergibt sich beim Einzug des Ernteguts eine unterschlächtige Förderung, bei der das Erntegut durch den Spalt zwischen dem unteren Ende der Einzugsschnecke und dem Schneidwerksboden hindurch nach hinten dem Einzugskanal der Erntemaschine zugefördert wird. Die Schneckenbleche auf der Einzugswalze dienen dabei dem Zweck, das von der Seite her zugeführte Erntegut zum Einzugsschacht hin zu leiten und die vom Schneidwerk in den Einzugskanal abgegebene Erntegutmatte zu den Seiten hin im oberen Bereich aufzufüllen, so dass sich auch im Querschnitt über die Breite und Höhe der an den Einzugskanal abgegebenen Erntegutmatte eine gleichmäßige Füllung und Verteilung ergibt. Die gesteuerten Einzugsfinger dienen dem Zweck, das sich vor der Einzugsschnecke ansammelnde Erntegut zu erfassen, nach unten zu drücken und in den Einzugskanal zu schieben. Um diese Funktion zu erfüllen, sind die aus dem Stand der Technik bekannten Einzugsfinger in ihrer Ein- und Ausfahrbewegung während eines Umlaufs der Einzugsschnecke durch eine entsprechende ortsfeste Position der Lagerwelle der Einzugsfinger exzentrisch zur Rotationsachse der Einzugsschnecke so gesteuert, dass ihre Spitzen ihre maximale ausgefahrene Position erreichen, wenn sie etwa waagerecht in die Vorfahrtrichtung der Erntemaschine zeigen. Dadurch reichen die Einzugsfinger möglichst weit nach vorne in das vor der Einzugsschnecke angesammelte Erntegut hinein. Im weiteren Verlauf der Rotationsbewegung werden die Einzugsfinger in die Einzugsschnecke eingezogen. Dabei kann sich der Anstellwinkel der Einzugsfinger im Verhältnis zu einer in radialer Richtung von der Rotationsachse der Einzugsschnecke aus verlaufenden Linie ändern.

Auch aus den Schriften US 2008/0098705 A1 und US 7,392,646 B2 sind gattungsgemäße Schneidwerke bekannt. Um bei einem reversierenden Betrieb der Einzugsschnecke die Rückförderung des bereits in den Einzugskanal eingezogenen Ernteguts nicht zu behindern, wird vorgeschlagen, die Welle zur Lagerung der Einzugsfinger aus einer ersten in eine zweite Position zu verlagern, in der die Einzugsfinger die Rückförderbewegung des Ernteguts unterstützen.

In der Praxis hat sich die Erntegutmenge, die vor der Einzugsschnecke angesammelt wird, durch die zunehmenden Arbeitsbreiten der Schneidwerke immer mehr vergrößert. Um gleichwohl die anfallende Erntgutmenge zu erfassen und abzufördern, ist es aus der Schrift EP 2 422 606 A2 bekannt, die Einzugsschnecke in seitlicher Richtung um schräg nach oben weisende Förderschneckenstummel zu verlängern, die sich in der Höhe aufbauendes Erntegut nach unten ziehen und der Einzugsschnecke zufördern sollen. Die zusätzlichen Förderschneckenstummel sind allerdings schwer und sie schränken die möglichen Schwenkbewegungen der seitlichen Schneidwerksteile ein.

Es ist die Aufgabe der vorliegenden Erfindung, eine Lösung vorzuschlagen, bei der die Annahme und Abförderung von seitlich zugefördertem und sich in der Höhe aufbauendem Erntegut im Bereich der Förderschnecke verbessert wird.

Die Aufgabe wird für ein gattungsgemäßes Schneidwerk gelöst, indem im äußeren Bereich der Einzugsschnecke angeordnete Einzugsfinger bei einer Umdrehung der Einzugsschnecke ihre maximal ausgefahrene Position in einer früheren Winkellage erreichen als im mittleren Bereich der Einzugsschnecke angeordnete Einzugsfinger.

Durch den Winkelversatz der maximal ausgefahrenen Position der äußeren Einzugsfinger nach oben hin kann sich an den äußeren Enden der Einzugsschnecke ansammelndes Erntegut früher und höher erfasst und nach unten mitgenommen werden. Da die im äußeren Bereich der Einzugsschnecke angeordneten Einzugsfinger ihre maximal ausgefahrene Position früher erreichen als die im mittleren Bereich der Einzugsschnecke angeordneten Einzugsfinger, werden diese auch früher wieder in die Einzugsschnecke zurückgezogen. Wegen dieses Umstands können die im äußeren Bereich der Einzugsschnecke angeordneten Einzugsfinger das Erntegut nicht so gut nach hinten hin abfördern und in den Einzugskanal der Erntemaschine drücken, dies ist an den äußeren Enden der Einzugsschnecke allerdings auch nicht erforderlich. Hier geht es zunächst vorrangig darum, das an der Einzugsschnecke von der Seite her ankommende Erntegut in einer Förderbewegung nach unten in Richtung der Abgabeöffnung zu befördern. Es entsteht ein abwärts gerichteter Förderimpuls auf das Erntegut, der durch die Rotationsbewegung der Einzugsschnecke aufrecht erhalten bleibt, so dass die rotierenden Einzugsfinger im äußeren Bereich der Einzugsschnecke eine schräg nach unten gerichtete Förderbewegung des Ernteguts erzeugen, durch die eine Ansammlung von Erntegut an den seitlichen Enden der Einzugsschnecke vermieden wird. Nachdem das von der Seite her an der Einzugsschnecke ankommende Erntegut einen Förderimpuls nach unten hin erhalten hat, kann es gut von den im mittleren Bereich der Einzugsschnecke angeordneten Einzugsfingern erfasst und auf herkömmliche Weise nach hinten hin an den Einzugskanal einer Erntemaschine abgegeben werden.

Nach einer Ausgestaltung der Erfindung ist die ortsfeste Position der Lagerwelle der im äußeren Bereich der Einzugsschnecke angeordneten Einzugsfinger im Verhältnis zur ortsfesten Position der Lagerwelle der im mittleren Bereich der Einzugsschnecke angeordneten Einzugsfinger entgegen der Rotationsrichtung der Einzugsschnecke um ein Winkelmaß versetzt. Für die Steuerung der Einzugsfinger sind verschiedene Steuerungstechniken möglich, aber diese vorgeschlagene Lösung ist mechanisch einfach aufgebaut und kostengünstig realisierbar.

Nach einer Ausgestaltung der Erfindung beträgt der Winkelversatz der maximal ausgefahrenen Position eines im äußeren Bereich der Einzugsschnecke angeordneten Einzugsfingers im Verhältnis zu einem im mittleren Bereich der Einzugsschnecke angeordneten Einzugsfinger ein Winkelmaß von 45° - 75°. Bei diesem Versatzmaß stellt sich eine gute Förderwirkung der im äußeren Bereich der Einzugsschnecke angeordneten Einzugsfinger nach unten ein, wobei gleichzeitig der Versatz zu den im mittleren Bereich der Einzugsschnecke angeordneten Einzugsfinger nicht zu groß ist und diese das nach unten geförderte Erntegut gut übernehmen können.

Nach einer Ausgestaltung der Erfindung ist ein im mittleren Bereich der Einzugsschnecke angeordneter Einzugsfinger in seiner maximal ausgefahrenen Position um einen in Rotationsrichtung voreilenden Anstellwinkel von 5° bis 25° zu einer in radialer Richtung von der Rotationsachse der Einzugsschnecke aus verlaufenden Linie angestellt. Durch die Voreilung der im mittleren Bereich der Einzugsschnecke angeordneten Einzugsfinger in der maximal ausgefahrenen Position kann das von diesen Einzugsfingern erfasste Erntegut nicht so leicht an ihnen abgleiten, sondern wird sicher erfasst und weiter nach unten gezogen und dabei gegen das tiefer vor der Einzugsschnecke angesammelte Erntegut gedrückt und vorverdichtet. Soweit noch Schneckenbleche im Bereich dieser im mittleren Bereich der Einzugsschnecke angeordneten Einzugsfinger angeordnet sind, können diese dabei das Erntegut erfassen und seitlich in die Richtung zur Abgabeöffnung befördern.

Nach einer Ausgestaltung der Erfindung sind die im äußeren Bereich der Einzugsschnecke angeordneten Einzugsfinger in einem Bereich angeordnet, in dem auch Schneckenbleche auf dem Umfang der Einzugsschnecke angeordnet sind. Durch das Zusammenwirken der von den Schneckenblechen erzeugten seitlichen Förderbewegung und der von den Einzugsfingern erzeugten Förderbewegung nach unten ergibt sich im äußeren Bereich der Einzugsschnecke ein sicherer nach schräg unten gerichteter Förderimpuls auf das Erntegut.

Nach einer Ausgestaltung der Erfindung erstrecken sich die Schneckenbleche von dem Bereich, in dem die im äußeren Bereich der Einzugsschnecke angeordneten Einzugsfinger positioniert sind, bis in einen Bereich, in dem die im mittleren Bereich der Einzugsschnecke angeordneten Einzugsfinger positioniert sind. Durch die Überschneidung der beiden Bereiche, in denen die Einzugsfinger in ihrer maximal ausgefahrenen Position einen Winkelversatz zueinander aufweisen, bleibt der seitlich gerichtete Förderimpuls auf das Erntegut auch in der Übergangszone aufrecht erhalten. Durch die kontinuierliche Weiterbeförderung des Ernteguts mit den Schneckenblechen werden Stockungen im Materialfluss im Übergangsbereich vermieden.

Nach einer Ausgestaltung der Erfindung sind die im äußeren Bereich der Einzugsschnecke angeordneten Einzugsfinger länger als die im mittleren Bereich der Einzugsschnecke angeordneten Einzugsfinger. Durch die längeren Einzugsfinger können diese weiter nach oben in das an den äußeren Enden der Einzugsschnecke ankommende Erntegut hinein reichen, sie verfügen dadurch über eine größere Wirkung. Da sie früher wieder in die Einzugsschnecke eingezogen werden, wird eine sonst drohende Kollision mit dem Boden des Schneidwerks vermieden.

Nach einer Ausgestaltung der Erfindung ist die Einzugsschnecke breiter als die Übergabeöffnung zum Einzugskanal einer nachgeordneten Erntemaschine und im äußeren Bereich der Einzugsschnecke angeordnete Einzugsfinger sind nach außen hin seitlich versetzt zum seitlichen Rand der Übergabeöffnung positioniert. Hierdurch ist es möglich, das Erntegut bereits nach schräg unten zu befördern, bevor es in seitlicher Richtung den Rand der Übergabeöffnung erreicht hat. Dadurch wird eine homogene Füllung der Erntegutmatte über ihren Querschnitt erreicht, die durch die Übergabeöffnung an den Einzugskanal der Erntemaschine übergeben wird.

Nach einer Ausgestaltung der Erfindung ragen die im äußeren Bereich der Einzugsschnecke angeordneten Einzugsfinger über den Hüllkreis der Schneckenbleche hinaus. Durch diese Maßnahme wird die Wirkung der im äußeren Bereich der Einzugsschnecke angeordneten Einzugsfinger erhöht, sie können auch höher aufgeschobenes Erntegut erfassen und nach unten ziehen.

Es wird ausdrücklich darauf hingewiesen, dass die vorstehend beschriebenen Ausgestaltungen jeweils für sich, aber auch in beliebiger Kombination mit dem Gegenstand des Hauptanspruchs und den übrigen Ausgestaltungen kombinierbar ist, soweit dem keine technischen Hindernisse entgegenstehen.

Weitere Abwandlungen und Ausgestaltungen der Erfindung lassen sich der nachfolgenden gegenständlichen Beschreibung und den Zeichnungen entnehmen.

Die Erfindung soll nachfolgend anhand eines Ausführungsbeispiels näher erläutert werden. Es zeigen:
- Fig. 1:: eine seitliche Schnittansicht auf ein Schneidwerk mit Einzugsschnecke, und
- Fig. 2:: eine Ansicht auf eine Einzugsschnecke, und
- Fig. 3:: eine Querschnittsansicht auf eine Einzugsschnecke.

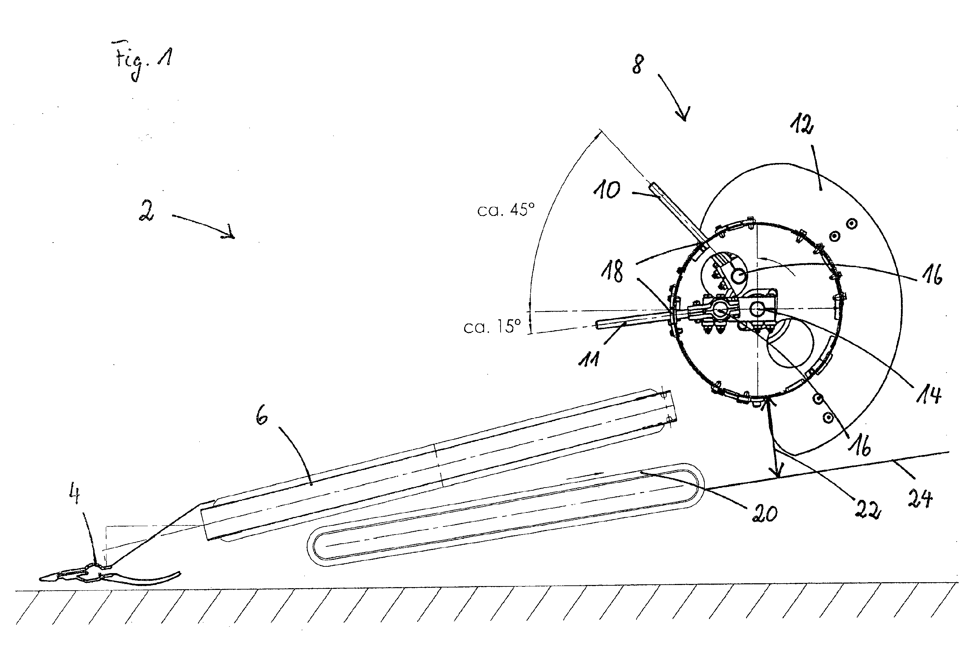

In Fig. 1 ist eine schematische Schnittansicht auf ein Schneidwerk 2 gezeigt. Im vorderen Bereich des Schneidwerks 2 ist ein Messerbalken 4 angeordnet, mit dem das Erntegut geschnitten wird. Nach dem Schnitt fällt das Erntegut auf die Querfördervorrichtung 6, bei der es sich im Ausführungsbeispiel um ein Fördertuch eines Draper-Schneidwerks handelt. Es können bei herkömmlichen Schneidwerken mit starrem Schneidwerksboden auch Förderschnecken als Querfördervorrichtungen verwendet werden.

Im rückwärtigen und mittigen Bereich des Schneidwerks 2 befindet sich die Einzugsschnecke 8, die an ihren äußeren Enden mit gesteuerten Einzugsfingern 10 versehen ist. Im mittleren Bereich der Einzugsschnecke 8 befinden sich die ebenfalls gesteuerten Einzugsfinger 11. Die Einzugsschnecke 8 ist um die Rotationsachse 14 rotierend antreibbar. Auf den Zylinder der Einzugsschnecke 8 ist ein Schneckenblech 12 aufgesetzt, das über den Außenmantel des Zylinders hervor steht.

Die gesteuerten Einzugsfinger 10, 11 sind mit ihren der Rotationsachse 14 zugewandten Enden jeweils auf einer zur Rotationsachse 14 der Einzugsschnecke 8 exzentrisch und ortsfest positionierten Lagerwelle 16 drehbar gelagert. Die Einzugsschnecke 8 weist in ihrem ansonsten geschlossenen Mantel in einer im Ausführungsbeispiel zylindrischen Form eine Anzahl von Durchgangslöchern 18 auf, durch die die Einzugsfinger 10, 11 hindurch geführt sind und ihre freien Enden nach außen ragen. Die Ränder der Durchgangslöcher 18 stützen die Einzugsfinger 10, 11 in ihrer räumlichen Lage ab. Durch die im Erntebetrieb ortsfeste und zur Rotationsachse 14 der Einzugsschnecke 8 exzentrische Position der Lagerwellen 16 ergibt sich bei einer Rotationsbewegung der Einzugsschnecke 8 während eines Umlaufes der Einzugsschnecke 8 eine Veränderung des Maßes, um das die freien Enden der Einzugsfinger 10, 11 über den geschlossenen Mantel der Einzugsschnecke 8 und die Durchgangslöcher 18 nach außen hervor stehen. Die gesteuerten Einzugsfinger 10, 11 führen also während eines Umlaufs der Einzugsschnecke 8 zum geschlossenen Mantel der Einzugsschnecke 8 und durch die Durchgangslöcher 18 hindurch eine Relativbewegung aus, durch die sich ihre der Rotationsachse 14 abgewandten Enden entsprechend davon entfernen und wieder annähern. Durch die ortsfest im Mantel der Einzugsschnecke 8 und beabstandet zu den Lagerwellen 16 angeordneten Durchgangslöcher 18, die bei einer Rotationsbewegung der Einzugsschnecke 8 mit dem Mantel um die Lagerwellen 16 umlaufen, ergeben sich für die Einzugsfinger 10, 11 während einer Umdrehung auch vorwärts und rückwärts gerichtete Kippbewegungen um die Lagerwelle 16 herum.

Je nach Anordnung der Lagerwellen 16 ergeben sich während einer Umdrehung der Einzugsschnecke 8 unterschiedliche Winkellagen der Einzugsschnecke 8, bei denen die Einzugsfinger 10, 11 ihre maximal ausgefahrene Position erreichen. Im Ausführungsbeispiel sind die Positionen der Lagerwellen 16 so gewählt, dass die im äußeren Bereich der Einzugsschnecke 8 angeordneten Einzugsfinger 10 bei einer Umdrehung der Einzugsschnecke 8 ihre maximal ausgefahrene Position in einer früheren Winkellage erreichen als die im mittleren Bereich der Einzugsschnecke 8 angeordneten Einzugsfinger 11. Bei einer Rotation der Einzugsschnecke 8 entgegen dem Uhrzeigersinn in Fig. 1 um 360° liegt die maximal ausgefahrene Position der im äußeren Bereich der Einzugsschnecke 8 angeordneten Einzugsfinger 10 bei etwa 45°, während die im mittleren Bereich der Einzugsschnecke 8 angeordneten Einzugsfinger 11 ihre maximal ausgefahrene Position bei etwa 105° erreichen. Im Ausführungsbeispiel liegt der Abstand zwischen den beiden maximal ausgefahrenen Positionen also bei 60°. Auch die Positionen der beiden Lagerwellen 16 sind um etwa 60° zueinander versetzt.

Das in Fig. 1 gezeigte Förderband 20 fördert das Erntegut entgegen der Fahrtrichtung der Erntemaschine mit dem Schneidwerk 2 in den Bestand des Ernteguts hinein in Richtung des sich auf der Rückseite des sich an das Schneidwerk 2 anschließenden, zeichnerisch nicht näher dargestellten Einzugskanals einer Erntemaschine zu. Bei der Annäherung des Ernteguts an die Einzugsschnecke 8 wird das Erntegut von den von oben nach unten in einer Rotationsbewegung bewegten Einzugsfingern 10, 11 erfasst und nach unten in Richtung des Spaltes 22 mitgenommen, der sich zwischen der Unterkante der Einzugsschnecke 8 und dem Schneidwerksboden 24 erstreckt. Der gesamte Erntegutstrom muss durch den Spalt 22 hindurch befördert werden, bevor das Erntegut durch die zeichnerisch nicht näher dargestellte Übergabeöffnung an den Einzugskanal abgegeben werden kann. Die Fig. 1 zeigt die Einzugsfinger 10, 11 in ihrer jeweiligen maximal ausgefahrenen Position in einer für beide Positionen identischen Drehstellung der Einzugsschnecke 8. In Fig. 1 ist gut erkennbar, dass die Einzugsfinger 10 das Erntegut in einer größeren Höhe erfassen und nach unten mitnehmen können als die Einzugsfinger 11. Durch das spätere Erreichen der maximal ausgefahrenen Position der Einzugsfinger 11 sind diese allerdings auch bei Erreichen des Spaltes 22 noch nicht wieder so weit in den Mantel beziehungsweise den Zylinder der Einzugsschnecke 8 zurück gezogen, dass sie nicht das Erntegut durch den Spalt 22 hindurch schieben könnten, während die Einzugsfinger 10 im Bereich des Spaltes 22 um ein größeres Maß in den Zylinder der Einzugsschnecke 8 zurück gezogen sind.

In Fig. 1 ist erkennbar, dass der im mittleren Bereich der Einzugsschnecke 8 angeordneter Einzugsfinger 11 in seiner maximal ausgefahrenen Position um einen in Rotationsrichtung voreilenden Anstellwinkel von 15° zur in radialer Richtung von der Rotationsachse der Einzugsschnecke aus verlaufenden Linie angestellt ist. Der Anstellwinkel kann nach Bedarf auf ein Winkelmaß von 5° bis 25° eingestellt werden.

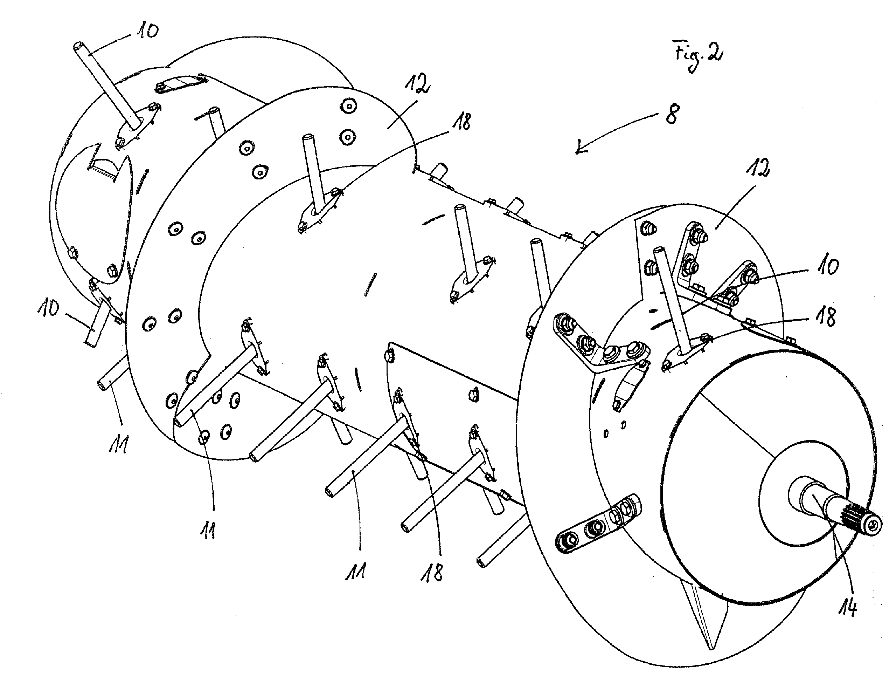

In Fig. 2 ist eine Ansicht von schräg oben auf eine Einzugsschnecke 8 gezeigt. In dieser Ansicht ist erkennbar, dass ein im äußeren Bereich der Einzugsschnecke 8 angeordneter Einzugsfinger 10 in einem Bereich angeordnet ist, in dem auch Schneckenbleche 12 auf dem Umfang der Einzugsschnecke 8 angeordnet sind. Es ist außerdem erkennbar, dass sich die Schneckenbleche 12 von dem Bereich, in dem die im äußeren Bereich der Einzugsschnecke 8 angeordneten Einzugsfinger 10 positioniert sind, bis in einen Bereich, in dem die im mittleren Bereich der Einzugsschnecke 8 angeordneten Einzugsfinger 11 positioniert sind, erstrecken.

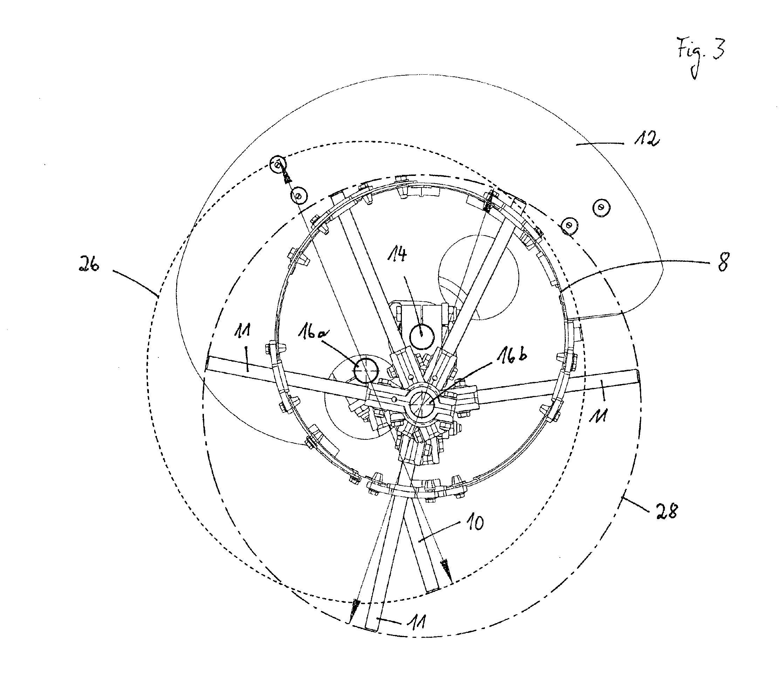

In Fig. 3 sind in einer Querschnittsansicht auf die Einzugsschnecke 8 die unterschiedlichen Hüllkurven 26, 28 erkennbar, die die freien Enden der im äußeren Bereich der Einzugsschnecke 8 angeordneten Einzugsfinger 10 und der im mittleren Bereich der Einzugsschnecke 8 angeordneter Einzugsfinger 11 während eines Umlaufs der Einzugsschnecke 8 beschreiben. Während die Hüllkurve 26 in einer gestrichelten Kreisbahn die Bewegungsbahn der freien Enden der im äußeren Bereich der Einzugsschnecke 8 angeordneten Einzugsfinger 10 um die Lagerwelle 16a herum zeigt, illustriert die Hüllkurve 28 in einer strichpunktierten Kreisbahn die Bewegungsbahn der freien Enden der im mittleren Bereich der Einzugsschnecke 8 angeordneter Einzugsfinger 11 um die Lagerwelle 16b herum. In Fig. 3 ist nur ein einziger Einzugsfinger 10 zeichnerisch dargestellt, es können natürlich noch mehr davon vorhanden sein.

Die vorstehende gegenständliche Beschreibung dient der Erläuterung der Erfindung. Die Erfindung ist nicht auf das Ausführungsbeispiel beschränkt. Einem Fachmann bereitet es keine Schwierigkeiten, das Ausführungsbeispiel auf eine ihm als geeignet erscheinende Weise abzuwandeln, um es an einen konkreten Anwendungsfall anzupassen.

## Patentansprüche

1. Schneidwerk (2) mit einem Rahmen, einem Messerbalken (4), Querfördervorrichtungen (6) und einer Einzugsschnecke (8) mit gesteuerten Einzugsfingern (10), **dadurch gekennzeichnet, dass** im äußeren Bereich der Einzugsschnecke (8) angeordnete Einzugsfinger (10) bei einer Umdrehung der Einzugsschnecke (8) ihre maximal ausgefahrene Position in einer früheren Winkellage erreichen als im mittleren Bereich der Einzugsschnecke (8) angeordnete Einzugsfinger (11).

2. Schneidwerk (2) nach Anspruch 1, **dadurch gekennzeichnet, dass** die ortsfeste Position der Lagerwelle (16) der im äußeren Bereich der Einzugsschnecke (8) angeordneten Einzugsfinger (10) im Verhältnis zur ortsfesten Position der Lagerwelle (16) der im mittleren Bereich der Einzugsschnecke (8) angeordneten Einzugsfinger (10) entgegen der Rotationsrichtung der Einzugsschnecke (8) um ein Winkelmaß versetzt ist.

3. Schneidwerk (2) nach Anspruch 1 oder 2, **dadurch gekennzeichnet, dass** der Winkelversatz der maximal ausgefahrenen Position eines im äußeren Bereich der Einzugsschnecke (8) angeordneten Einzugsfingers (10) im Verhältnis zu einem im mittleren Bereich der Einzugsschnecke (8) angeordneten Einzugsfinger (11) ein Winkelmaß von 45° - 75° beträgt.

4. Schneidwerk (2) nach einem der vorhergehenden Ansprüche, **dadurch gekennzeichnet, dass** ein im mittleren Bereich der Einzugsschnecke (8) angeordneter Einzugsfinger (11) in seiner maximal ausgefahrenen Position um einen in Rotationsrichtung voreilenden Anstellwinkel von 5° bis 25° zur in radialer Richtung von der Rotationsachse der Einzugsschnecke aus verlaufenden Linie angestellt ist.

5. Schneidwerk (2) nach einem der vorhergehenden Ansprüche, **dadurch gekennzeichnet, dass** die im äußeren Bereich der Einzugsschnecke (8) angeordneten Einzugsfinger (10) in einem Bereich angeordnet sind, in dem auch Schneckenbleche (12) auf dem Umfang der Einzugsschnecke (8) angeordnet sind.

6. Schneidwerk (2) nach Anspruch 5, **dadurch gekennzeichnet, dass** sich die Schneckenbleche (12) von dem Bereich, in dem die im äußeren Bereich der Einzugsschnecke (8) angeordneten Einzugsfinger (10) positioniert sind, bis in einen Bereich, in dem die im mittleren Bereich der Einzugsschnecke (8) angeordneten Einzugsfinger (11) positioniert sind, erstrecken.

7. Schneidwerk (2) nach einem der vorhergehenden Ansprüche, **dadurch gekennzeichnet, dass** die im äußeren Bereich der Einzugsschnecke (8) angeordneten Einzugsfinger (10) länger sind als die im mittleren Bereich der Einzugsschnecke (8) angeordneten Einzugsfinger (11).

8. Schneidwerk (2) nach einem der vorhergehenden Ansprüche, **dadurch gekennzeichnet, dass** die Einzugsschnecke (8) breiter ist als die Übergabeöffnung zum Einzugskanal einer nachgeordneten Erntemaschine und im äußeren Bereich der Einzugsschnecke (8) angeordnete Einzugsfinger (10) nach außen hin seitlich versetzt zum seitlichen Rand der Übergabeöffnung positioniert sind.

9. Schneidwerk (2) nach einem der vorhergehenden Ansprüche, **dadurch gekennzeichnet, dass** die im äußeren Bereich der Einzugsschnecke (8) angeordneten Einzugsfinger (10) über den Hüllkreis der Schneckenbleche hinausragen.
